# EUROPEAN PATENT APPLICATION

(11) **EP 4 843 962 A1**
(43) Date of publication of application: **25.11.2026**
(21) Application number: 24918542.2
(22) Date of filing: 23.12.2024
(51) Int. Cl.: C02F 3/12, C02F 1/44

(54) **SEWAGE TREATMENT DEVICE**

(30) Priority: 17.01.2024 JP 2024005061
(71) Applicant: KUBOTA CORPORATION, Osaka-shi, Osaka 530-0011 (JP)
(72) Inventor: YATSUGI, Soichiro, Amagasaki-shi Hyogo 661-8567 (JP); KONDO, Yasuhito, Amagasaki-shi Hyogo 661-8567 (JP)
(74) Representative: Müller-Boré & Partner Patentanwälte PartG mbB
(86) International application number: PCT/JP2024/045383
(87) International publication number: WO 2025/154485

(57) **Abstract**

Provided is a low-cost wastewater treatment apparatus with a low failure probability and high reliability, the apparatus including a flow equalization tank.

A wastewater treatment apparatus 100 includes: a wastewater inflow passage 4; a biological treatment tank 7, 8 configured to purify wastewater flowing in from the wastewater inflow passage 4; and a flow equalization tank 5 configured to adjust an amount of the wastewater flowing into the biological treatment tank 7, 8 from the wastewater inflow passage 4. In the wastewater inflow passage 4, a first outlet 43 through which wastewater flows into the biological treatment tank 7, 8 and a second outlet 44 through which wastewater flows into the flow equalization tank 5 are formed, the first outlet 43 having a height set to a lower level than a height of the second outlet 44.

## Description

### Technical Field

The present invention relates to a wastewater treatment apparatus.

### Background Art

Patent Literature 1 describes a wastewater treatment apparatus employing a Membrane Bio Reactor, where a biological treatment tank is provided for biological treatment of wastewater with activated sludge, and a membrane separation device for solid-liquid separation of activated sludge-mixed liquid in the tank is immersed in the tank.

Since an amount of wastewater that can be treated by the Membrane Bio Reactor is proportional to a membrane area to be installed, it is necessary to install a membrane having an area that can address a peak inflow of wastewater in the case of a fluctuating inflow of the wastewater.

However, a membrane is relatively expensive equipment and requires a high running cost including power consumption. Thus, introduction of a membrane large enough to address a peak inflow of wastewater leads to a relatively high running cost, and there is a need for energy saving.

Thus, a standard design employed for a small-scale sewage treatment plant is installation of a flow equalization tank to thereby absorb fluctuation in inflow wastewater, and a minimized necessary membrane area by means of sending a uniform amount of wastewater to a biological treatment tank (see Fig. 7 and paragraph 0072 of Patent Literature 1).

### Citation List

### Patent Literature

Patent Literature 1: Japanese Unexamined Patent Application Publication No. 2018-34077

### Summary of Invention

### Technical Problem

Meanwhile, a flow equalization tank includes: an inline type that temporarily receives the whole amount of wastewater; and a sideline type that receives the whole amount of wastewater or a part thereof as necessary.

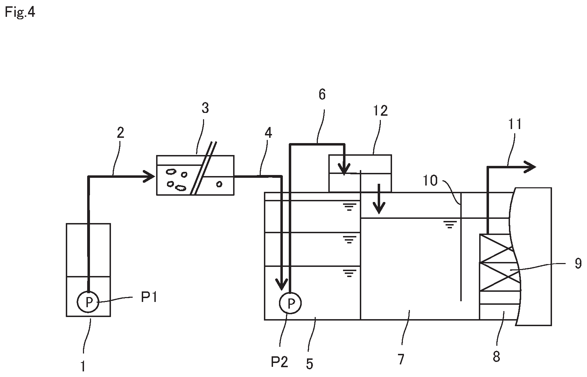

As shown in Fig. 4, in an inline-type flow equalization tank 5, the whole amount of wastewater pumped by a wastewater pump P1, from which impurities are removed by a fine screen 3, is temporarily retained in the flow equalization tank 5; the wastewater retained in the flow equalization tank 5 is pumped by a pump P2 and transferred to a wastewater distribution tank 12 via a wastewater inflow passage 6; and the wastewater with a constant flow rate adjusted by the wastewater distribution tank 12 is transferred to a biological treatment tank 7, 8.

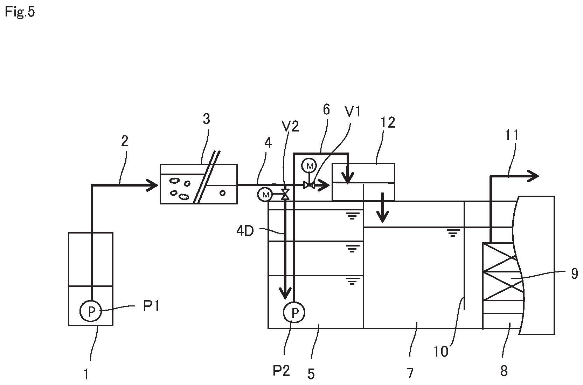

As shown in Fig. 5, in a sideline-type flow equalization tank 5, wastewater pumped by the wastewater pump P1, from which impurities are removed by the fine screen 3, is transferred to the wastewater distribution tank 12 via the wastewater inflow passage 4; and the wastewater with a constant flow rate adjusted by the wastewater distribution tank 12 is transferred to the biological treatment tank 7, 8. When a water level in the biological treatment tank 7, 8 reaches a predetermined maximum water level, excess wastewater is retained in the flow equalization tank 5 via a branch passage 4D branching off from the wastewater inflow passage 4; when the water level in the biological treatment tank 7, 8 falls below the maximum water level, the wastewater is again supplied to the wastewater distribution tank 12 via the wastewater inflow passage. When the amount of wastewater flowing into the biological treatment tank 7, 8 decreases, the wastewater retained in the flow equalization tank 5 is pumped by the pump P2 and transferred to the wastewater distribution tank 12 via a wastewater inflow passage 6. The wastewater inflow passage 4 and the branch passage 4D are provided with solenoid valves V1, V2 configured to switch flow passages.

The sideline-type flow equalization tank is superior to the inline type from the viewpoint of energy saving since it can reduce the amount of water to be pumped again. However, it is difficult to predict fluctuation in an amount of wastewater to be generated, and it is necessary to employ automatic water control equipment such as an electrically-powered movable weir and a motor-operated valve for flow passage switching in the case of employing the sideline-type flow equalization tank on a small-scale sewage treatment plant predicated on patrol management, resulting in an increased cost. If the automatic water control equipment does not correctly operate because of a malfunction or the like, wastewater may overflow a water tank or untreated water discharge accident may occur. Therefore, a backup mechanism is essential for the automatic water control equipment. However, if multiple electrically-powered movable weirs or motor-operated valves for backup are installed to prepare for failures, the cost is further increased, making implementation thereof difficult.

In view of the above-described problems, the present invention has an object to provide a low-cost wastewater treatment apparatus with a low failure probability and high reliability, the apparatus including a flow equalization tank.

### Solution to Problem

To achieve the above object, a first feature of a wastewater treatment apparatus according to the present invention is a wastewater treatment apparatus including: a wastewater inflow passage; a biological treatment tank configured to purify wastewater flowing in from the wastewater inflow passage; and a flow equalization tank configured to adjust an amount of the wastewater flowing into the biological treatment tank from the wastewater inflow passage. In the wastewater inflow passage, a first outlet through which wastewater flows into the biological treatment tank and a second outlet through which wastewater flows into the flow equalization tank are formed, the first outlet having a height set to a lower level than a height of the second outlet. The biological treatment tank has a maximum water level specified based on the height of the second outlet.

It is possible to transfer wastewater flowing into the wastewater inflow passage from the first outlet to the biological treatment tank and also from the second outlet to the flow equalization tank. Since the height of the first outlet is set to the lower level than the height of the second outlet, the wastewater transferred via the wastewater inflow passage entirely flows out to the biological treatment tank via the first outlet in a state that a water level in the biological treatment tank is lower than the height of the second outlet. Then, when an increased inflow of the wastewater makes the water level in the biological treatment tank equal to or higher than a water level corresponding to a height difference between the first outlet and the second outlet, the wastewater flowing out of the biological treatment tank in an amount that exceeds a volume of activated sludge or treated water flows out of the second outlet to the flow equalization tank. Thereafter, when the decreased inflow of the wastewater makes the water level in the biological treatment tank less than the water level corresponding to the height difference between the first outlet and the second outlet, the whole amount of the inflow wastewater again flows out to the biological treatment tank via the first outlet. Accordingly, it is not necessary to provide a water control mechanism with a risk of causing failures, including motor-operated water control equipment such as a motor-operated valve for switching whether to discharge the wastewater transferred via the wastewater inflow passage into the biological treatment tank or the flow equalization tank, and an electronic control device configured to control the motor-operated water control equipment, whereby the wastewater treatment apparatus with high reliability can be realized.

As a second feature in addition to the above-described first feature, the height of the first outlet is set to a lower level than the height of the second outlet, and the maximum water level in the biological treatment tank is specified based on the height of the second outlet.

Fluctuation in the water level in the biological treatment tank shall be accepted to the extent of the water level corresponding to the height difference between the first outlet and the second outlet. Even in the case of rapid increase in the wastewater inflow exceeding processing capacity of the biological treatment tank, it is possible to suppress the flow into the flow equalization tank by temporarily storing the water in the biological treatment tank, and minimize the power consumption necessary for pumping of wastewater into the wastewater inflow passage.

As a third feature in addition to the above-described first feature, the first outlet is formed on a downstream side of the wastewater inflow passage from the second outlet.

The wastewater flowing into the wastewater inflow passage will flow out of the second outlet to the flow equalization tank, and no activated sludge in the biological treatment tank will flow out of the first outlet to the flow equalization tank.

In addition to the above-described first feature, the wastewater treatment apparatus according to a fourth feature further includes: a wastewater pump well in which a wastewater pump configured to transfer wastewater to the wastewater inflow passage is installed; and a wastewater pump control unit configured to intermittently operate the wastewater pump when a wastewater level in the wastewater pump well exceeds a first activation water level, and continuously operate the wastewater pump when the wastewater level exceeds a second activation water level higher than the first activation water level.

By intermittently operating the wastewater pump until the wastewater level in the wastewater pump well exceeds the second activation water level higher than the first activation water level, it is possible to prevent rapid increase in the amount of wastewater flowing into the wastewater inflow passage, and as a result, reduce the amount of wastewater flowing out of the wastewater inflow passage to the flow equalization tank, thereby minimizing power consumption necessary for pumping of wastewater by the wastewater pump.

As a fifth feature in addition to any of the above-described first to fourth features, the biological treatment tank employs a Membrane Bio Reactor.

By absorbing fluctuation in wastewater flowing into the wastewater inflow passage and stabilizing the amount of wastewater sent to the biological treatment tank, it is possible to realize a low-cost wastewater treatment apparatus including a flow equalization tank with high reliability while preventing increase in a membrane area to reduce an initial cost and a running cost.

### Advantageous Effects of Invention

As described above, with the present invention, it is possible to provide a low-cost wastewater treatment apparatus with a low failure probability and high reliability, the apparatus including a flow equalization tank.

### Brief Description of Drawings

Fig. 1 is a diagram illustrating a wastewater treatment apparatus.
Fig. 2A is a diagram illustrating operation of a wastewater treatment apparatus.
Fig. 2B is a diagram illustrating operation of the wastewater treatment apparatus.
Fig. 3A is a diagram illustrating a wastewater treatment apparatus according to another embodiment.
Fig. 3B is a diagram illustrating a wastewater treatment apparatus according to another embodiment.
Fig. 4 is a diagram illustrating a conventional inline-type flow equalization tank.
Fig. 5 is a diagram illustrating a conventional sideline-type flow equalization tank.

### Best Mode for Carrying out the Invention

Hereinafter, a wastewater treatment apparatus according to the present invention will be described.

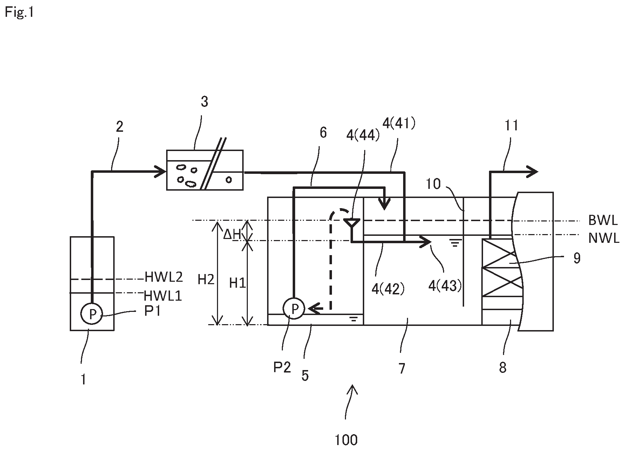

Fig. 1 shows a wastewater treatment apparatus 100 that is installed in a sewage treatment plant or an industrial effluent treatment facility and employs a Membrane Bio Reactor.

The wastewater treatment apparatus 100 includes a wastewater pump well 1 in which wastewater is retained, a fine screen 3, a sideline-type flow equalization tank 5, a biological treatment tank 7, 8, a membrane separation device 9, etc. The reference sign 7 indicates an anoxic tank constituting a part of the biological treatment tank, and the reference sign 8 indicates an aerobic tank constituting a part of the biological treatment tank.

When wastewater retained in the wastewater pump well 1 reaches any of preset activation water levels HWL1, HWL2, a wastewater pump P1 is activated to pump the wastewater into a riser pipe 2, and the wastewater is transferred to the anoxic tank 7 via a wastewater inflow passage 4 after impurities are removed by the fine screen 3. The wastewater transferred to the anoxic tank 7 is mixed with activated sludge in the tank, transferred to the aerobic tank 8 through a bottom opening of a partition wall 10 to perform nitrification treatment of ammoniac nitrogen, and a part thereof is returned to the anoxic tank 7 to perform denitrification treatment thereof. Organic components of the wastewater subjected to the nitrification treatment in the aerobic tank 8 are also decomposed and removed; the wastewater is subjected to suction filtration by the membrane separation device 9 as treated water; and the treated water taken out from a suction pipe 11 is discharged into a river after sterilization treatment and the like, or utilized as on-site treated water.

An end of a wastewater transport pipe 41 constituting the wastewater inflow passage 4 is branched to a branch pipe 42 in two directions. A first outlet 43 through which wastewater flows into the anoxic tank 7 as the biological treatment tank is formed on one end of the branch pipe 42, and a second outlet 44 through which wastewater flows into the flow equalization tank 5 is formed on the other end.

The first outlet 43 has a height H1 (height from the bottom of the anoxic tank 7) set to a lower level than a height H2 of the second outlet 44 (height from the bottom of the flow equalization tank 5) by ΔH, and a maximum water level in the anoxic tank 7 is specified based on the height H2 of the second outlet 44. Specifically, the end side of the wastewater transport pipe 41 hangs down and branches to the horizontal branch pipe 42. One end of the branch pipe 42 functions as the first outlet 43 open into the anoxic tank 7, while the other end of the branch pipe 42 bends upward and the leading end thereof functions as the second outlet 44 open into the flow equalization tank 5.

That is, the configuration allows wastewater flowing into the wastewater inflow passage 4 via the fine screen 3 to be transferred from the first outlet 43 of the branch pipe 42 to the anoxic tank 7, and also from the second outlet 44 of the branch pipe 42 to the flow equalization tank 5.

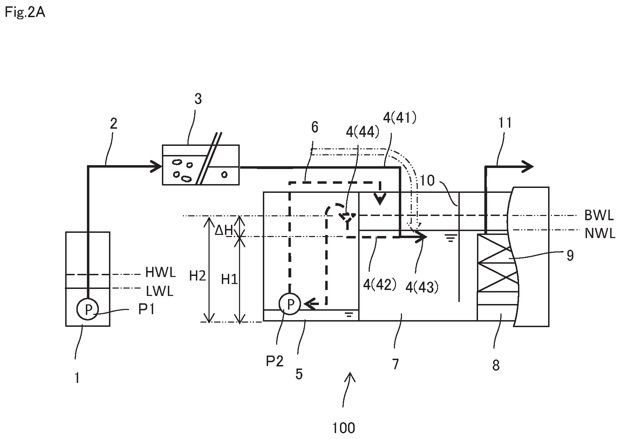

As shown in Fig. 2A, since the height H1 of the first outlet 43 of the branch pipe 42 is set to the lower level than the height H2 of the second outlet 44 of the branch pipe 42 by ΔH, wastewater transferred via the wastewater transport pipe 41 entirely flows out to the anoxic tank 7 via the first outlet 43 in a state that the water level in the anoxic tank 7 is lower than the height of the second outlet 44.

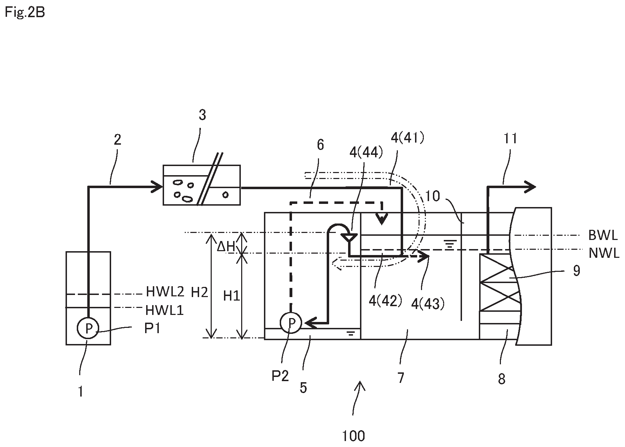

Then, when the water level in the anoxic tank 7 becomes equal to or higher than a water level corresponding to the height difference ΔH between the first outlet 43 and the second outlet 44 of the branch pipe 42, the flow of wastewater flowing out of the first outlet 43 of the branch pipe 42 to the anoxic tank 7 stops, as shown in Fig. 2B, and the wastewater flowing into the wastewater transport pipe 41 flows out of the second outlet 44 of the branch pipe 42 to the flow equalization tank 5.

Thereafter, when the water level in the biological treatment tank 7, 8 becomes less than the water level corresponding to the height difference ΔH between the first outlet 43 and the second outlet 44 along with the progress of the biological treatment and suction filtration of the treated water by the membrane separation device 9, the wastewater again flows out to the anoxic tank 7 via the first outlet 43.

Accordingly, it is not necessary to provide a water control mechanism with a risk of causing failures, including motor-operated water control equipment such as a motor-operated valve for switching whether to discharge the wastewater transferred via the wastewater transport pipe 41 and the branch pipe 42 as the wastewater inflow passage 4 into the biological treatment tank 7, 8 or the flow equalization tank 5, and an electronic control device configured to control the motor-operated water control equipment, whereby the wastewater treatment apparatus with high reliability can be realized.

The height of the first outlet 43 of the branch pipe 42 is set to the lower level than the height of the second outlet 44, a maximum water level BWL of the biological treatment tank 7, 8 is specified based on the height of the second outlet 44, and a steady water level NWL of the biological treatment tank 7, 8 is set to a slightly higher level than the height of the first outlet 43.

Fluctuation in the water level in the biological treatment tank 7, 8 shall be accepted to the extent of the water level corresponding to the height difference between the first outlet 43 and the second outlet 44 of the branch pipe 42. Even in the case of rapid increase in a wastewater inflow exceeding processing capacity of the biological treatment tank 7, 8, it is possible to suppress the flow into the flow equalization tank 5 by temporarily storing the water in the biological treatment tank 7, 8. In other words, it is possible to minimize power consumption necessary for pumping of wastewater into the wastewater inflow passage 4 by the wastewater pump P1.

When the amount of wastewater pumped into the wastewater inflow passage 4 by the wastewater pump P1 decreases and the water level in the biological treatment tank 7, 8 falls, for example, below the steady water level NWL, the wastewater retained in the flow equalization tank 5 is transferred to the biological treatment tank 7, 8 by the pump P2 disposed on the flow equalization tank 5.

The wastewater pump P1 disposed on the wastewater pump well 1 is intermittently operated at a predetermined time interval by a wastewater pump control unit when a wastewater level in the wastewater pump well 1 exceeds the first activation water level HWL1, and is continuously operated when the wastewater level exceeds the second activation water level HWL2 higher than the first activation water level HWL1. Note that a pump stop water level is, of course, set to a lower position than the first activation water level HWL1.

The wastewater pump is intermittently operated when the wastewater is retained in the wastewater pump well 1 in an amount that does not cause overflow, that is, until the wastewater level in the wastewater pump well 1 exceeds the second activation water level higher than the first activation water level HWL1. Accordingly, it is possible to prevent rapid increase in the amount of wastewater flowing into the wastewater inflow passage 4, and as a result, reduce the amount of wastewater flowing out of the wastewater inflow passage 4 to the flow equalization tank 5, thereby allowing effective use of energy to be used for pumping the wastewater by the wastewater pump P1.

For example, provided that pumping capacity of the wastewater pump P1 is 1.2 m³/min, processing capacity of the membrane separation device is 0.76 m³/min, and processing capacity shortage is 0.44 m³/min, a fluctuation range of 0.3 m (BWL-NWL) is ensured for the water level in the biological treatment tank 7, 8 (with a water surface area of 60 m²), such that a time during which wastewater can be accepted while the treatment is stopped is 18 m³ ÷ 0.44 m³/min = 40 min and a flow rate adjustment function for 40 minutes can be ensured.

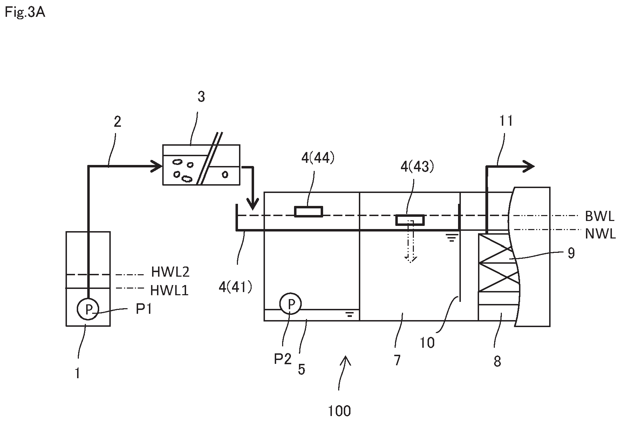

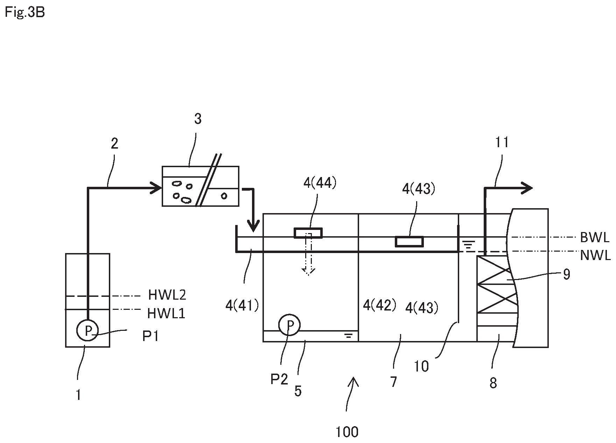

In the above-described embodiment, described is the case of configuring the wastewater inflow passage 4 as a pipe line, but the specific aspect thereof is not limited as long as the height of the first outlet is set to the lower level than the height of the second outlet. Moreover, as shown in Figs. 3A and 3B, the wastewater inflow passage 4 may be configured with a water passage 41. The first outlet 43 formed in the water passage 41 is on a downstream side of a flow passage passing through the wastewater inflow passage 4 from the second outlet 44.

Also in this case, as shown in Fig. 3A, when the water level in the anoxic tank 7 is lower than the height of the second outlet 44, the wastewater transferred via the water passage 41 entirely flows out to the anoxic tank 7 via the first outlet 43.

Then, when the water level in the anoxic tank 7 becomes equal to or higher than the water level corresponding to the height difference ΔH between the first outlet 43 and the second outlet 44, the flow of wastewater flowing out of the first outlet 43 to the anoxic tank 7 stops due to the influence of atmospheric pressure applied to the wastewater surface in the anoxic tank 7, as shown in Fig. 3B, and the wastewater flowing into the water passage 41 flows out of the second outlet 44 to the flow equalization tank 5.

Accordingly, in a case that the wastewater flowing into the water passage 41 flows out of the second outlet 44 to the flow equalization tank 5, no activated sludge in the biological treatment tank 7, 8 flows out of the first outlet 43 to the flow equalization tank 5.

In the above-described embodiment, the wastewater treatment apparatus 100 employing the Membrane Bio Reactor in the biological treatment tank is described, but the present invention is also applicable to a wastewater treatment apparatus employing a conventional activated sludge process, in which wastewater subjected to biological treatment in a biological treatment tank is guided to a sedimentation tank and subjected to solid-liquid separation, and a supernatant liquid is extracted as treated water.

The above-described embodiment is one aspect of the present invention and the description thereof shall not limit the present invention, not to mention that the specific configurations of the respective sections can be modified and designed as appropriate to the extent that the operations and effects of the present invention can be obtained.

### Reference Signs List

1: wastewater pump well
2: riser pipe
3: fine screen
4: wastewater inflow passage
41: wastewater transport pipe (wastewater inflow passage)
42: branch pipe (wastewater inflow passage)
43: first outlet
44: second outlet
5: flow equalization tank
7: anoxic tank (biological treatment tank)
8: aerobic tank (biological treatment tank)
9: membrane separation device
10: partition wall
11: suction pipe

## Claims

1. A wastewater treatment apparatus comprising: a wastewater inflow passage; a biological treatment tank configured to purify wastewater flowing in from the wastewater inflow passage; and a flow equalization tank configured to adjust an amount of the wastewater flowing into the biological treatment tank from the wastewater inflow passage, wherein
in the wastewater inflow passage, a first outlet through which wastewater flows into the biological treatment tank and a second outlet through which wastewater flows into the flow equalization tank are formed, the first outlet having a height set to a lower level than a height of the second outlet.

2. The wastewater treatment apparatus according to claim 1, wherein the biological treatment tank has a maximum water level specified based on the height of the second outlet.

3. The wastewater treatment apparatus according to claim 1, wherein the first outlet is formed on a downstream side of the wastewater inflow passage from the second outlet.

4. The wastewater treatment apparatus according to claim 1, further comprising: a wastewater pump well in which a wastewater pump configured to transfer wastewater to the wastewater inflow passage is installed; and a wastewater pump control unit configured to intermittently operate the wastewater pump when a wastewater level in the wastewater pump well exceeds a first activation water level, and continuously operate the wastewater pump when the wastewater level exceeds a second activation water level higher than the first activation water level.

5. The wastewater treatment apparatus according to any one of claims 1 to 4, wherein the biological treatment tank employs a Membrane Bio Reactor.
